(19) Europäisches Patentamt
European Patent Office
Office européen des brevets

(11) **EP 4 215 337 A1**

(12) **EUROPEAN PATENT APPLICATION**
published in accordance with Art. 153(4) EPC

(43) Date of publication:
**26.07.2023 Bulletin 2023/30**

(21) Application number: **21869188.9**

(22) Date of filing: **02.09.2021**

(51) International Patent Classification (IPC):
**B29C 48/09** (2019.01)   **B29C 48/27** (2019.01)
**B29C 48/28** (2019.01)   **B29C 48/32** (2019.01)
**B29C 48/885** (2019.01)   **B29C 48/90** (2019.01)
**F16L 11/06** (2006.01)

(52) Cooperative Patent Classification (CPC):
**B29C 48/09; B29C 48/27; B29C 48/28;**
**B29C 48/32; B29C 48/885; B29C 48/90;**
**F16L 11/06**

(86) International application number:
**PCT/JP2021/032272**

(87) International publication number:
**WO 2022/059501 (24.03.2022 Gazette 2022/12)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.09.2020 JP 2020157777**

(71) Applicant: **Daikin Industries, Ltd.**
**Osaka-shi, Osaka 530-0001 (JP)**

(72) Inventors:
• **IMAMURA, Hitoshi**
  **Osaka-shi, Osaka 530-0001 (JP)**
• **HAMADA, Hiroyuki**
  **Osaka-shi, Osaka 530-0001 (JP)**
• **MUKAI, Eri**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **TUBE MANUFACTURING METHOD, EXTRUSION MOLDING MACHINE, MOLD FOR EXTRUSION MOLDING, WINDING DEVICE, AND TUBE**

(57)     Provided is a method for producing a tube, comprising:

extruding a melt-fabricable fluororesin from a mold of an extruder into a form of a tube,

leading the extruded melt-fabricable fluororesin to a cooling device to cool the extruded melt-fabricable fluororesin, and

winding a resulting cooled tube onto a winding reel using a winding device,

wherein a gas is fed from a head end of the tube wound onto the winding reel into a hollow of the tube,

the gas in the hollow is allowed to pass through a gas-introducing entrance of the mold and then through a gas-discharging hole of the mold to discharge the gas outside, thereby allowing the gas to flow along the hollow, and

an internal pressure of the hollow is kept higher than atmospheric pressure and lower than 0.5 kgf/cm$^2$.

Figure 1

**Description**

TECHNICAL FIELD

The present disclosure relates to a method for producing a tube, an extruder, an extrusion mold, a winding device, and a tube.

BACKGROUND ART

Patent Document 1 discloses a method for producing a fluororesin tube with reduced particles, and it is a method for producing a fluororesin tube, the method comprising melting and extruding a fluororesin or a fluororesin-based resin mixture to mold it into a form of a tube, wherein after or during the molding of the tube, clean air is allowed to flow into the tube to purge particles from the inside of the tube.

RELATED ART

PATENT DOCUMENTS

Patent Document 1: JP2000-233435A

SUMMARY OF THE INVENTION

PROBLEM TO BE SOLVED BY THE INVENTION

An object of the present disclosure is to provide a method for producing a tube, the method enabling the producing of a tube having a clean inner surface and excellent dimensional stability with high productivity while keeping the inner surface clean easily, and devices for use in the production method.
Another object of the present disclosure is to provide a tube that can be handled with the inner surface thereof kept clean.

MEANS FOR SOLVING THE PROBLEM

The present disclosure provides a method for producing a tube, comprising:

extruding a melt-fabricable fluororesin from a mold of an extruder into a form of a tube,
leading the extruded melt-fabricable fluororesin to a cooling device to cool the extruded melt-fabricable fluororesin, and
winding a resulting cooled tube onto a winding reel using a winding device,
wherein a gas is fed from a head end of the tube wound onto the winding reel into a hollow of the tube,
the gas in the hollow is allowed to pass through a gas-introducing entrance of the mold and then through a gas-discharging hole of the mold to discharge the gas outside, thereby allowing the gas to flow along the hollow, and
an internal pressure of the hollow is kept higher than atmospheric pressure and lower than 0.5 kgf/cm$^2$.

In the production method of the present disclosure, the gas fed into the hollow is preferably a gas that has passed through a filter.
In the production method of the present disclosure, the gas fed into the hollow is preferably air that has passed through a filter.
In the production method of the present disclosure, after stopping the extrusion of the melt-fabricable fluororesin, the tube is preferably melt-sealed and cut at two arbitrary point therein, to thereby produce a tube filled with a gas.
In the production method of the present disclosure, the following are preferable:

the extruder comprises the mold and a back-flow prevention device,
the mold comprises: a resin discharge outlet configured to discharge the melt-fabricable fluororesin in the form of a tube; the gas-introducing entrance configured to introduce the gas in the hollow of the melt-fabricable fluororesin in the form of a tube to the gas-discharging hole of the mold; and the gas-discharging hole configured to discharge the gas introduced from the gas-introducing entrance to an outside of the mold, and
the back-flow prevention device is connected downstream of the gas-discharging hole of the mold to prevent a back flow of the gas.

In the production method of the present disclosure, the following are preferable:

the mold comprises: a resin discharge outlet configured to discharge the melt-fabricable fluororesin in the form of a tube; a gas-introducing entrance configured to introduce the gas in the hollow of the melt-fabricable fluororesin in the form of a tube to a gas-discharging hole of the mold; and the gas-discharging hole configured to discharge the gas introduced from the gas-introducing entrance to an outside of the mold, and
the gas-introducing entrance is formed such that the gas-introducing entrance has an opening with a diameter gradually increasing from the gas-discharging hole toward the gas-introducing entrance.

In the production method of the present disclosure, the winding device preferably includes:

a gas-feeding inlet configured to feed the gas into the hollow of the tube;
one or more filters provided downstream of the gas-feeding inlet and configured to remove a contaminant in the gas fed from the gas-feeding inlet;
a tube-connecting port provided downstream of the one or more filters and configured to connect the tube thereto; and
a winding reel configured to wind the tube thereon.

In the production method of the present disclosure, the winding device preferably includes:

a gas-feeding inlet configured to feed the gas into the hollow of the tube;
a lead tube connected to the gas-feeding inlet, wherein the lead tube is for joining the head end of the tube before being wound to the gas-feeding inlet; and
a winding reel configured to wind the tube and the lead tube thereon.

In the production method of the present disclosure, the following are preferable:

the winding device comprises a lead tube, and
while the gas is fed into the lead tube, a head end of the lead tube is connected to a head end of the melt-fabricable fluororesin extruded from the mold, thereby feeding the gas into the hollow of the tube.

In the production method of the present disclosure, the following are preferable:

the head end of the lead tube is connected to the head end of the melt-fabricable fluororesin extruded from the mold, with the lead tube reeled-out from the winding device to the mold, and
then, continuous extrusion of the melt-fabricable fluororesin from the mold and winding of the lead tube and the cooled tube are started.

In the production method of the present disclosure, the melt-fabricable fluororesin is preferably a tetrafluoroethylene/fluoroalkyl vinyl ether copolymer.

The present disclosure also provides an extruder comprising: a mold configured to mold a melt-fabricable fluororesin into a form of a tube; and a back-flow prevention device,

wherein the mold comprises: a resin discharge outlet configured to discharge the melt-fabricable fluororesin in the form of a tube; a gas-introducing entrance configured to introduce a gas in a hollow of the melt-fabricable fluororesin in the form of a tube to a gas-discharging hole of the mold; and the gas-discharging hole configured to discharge the gas introduced from the gas-introducing entrance to an outside of the mold, and
the back-flow prevention device is connected downstream of the gas-discharging hole of the mold to prevent a back flow of the gas.

In the extruder of the present disclosure, the back-flow prevention device is preferably a bubbling device.

The present disclosure also provides an extrusion mold for molding a melt-fabricable fluororesin into a form of a tube, comprising: a resin discharge outlet configured to discharge the melt-fabricable fluororesin in the form of a tube; a gas-introducing entrance configured to introduce the gas in the hollow of the melt-fabricable fluororesin in the form of a tube to a gas-discharging hole of the mold; and the gas-discharging hole configured to discharge the gas introduced from the gas-introducing entrance to an outside of the mold, wherein the gas-introducing entrance is formed such that the gas-introducing entrance has an opening with a diameter gradually increasing from the gas-discharging hole toward the gas-introducing entrance.

In the extrusion mold of the present disclosure, the gas-introducing entrance is, preferably, inversely tapered.

The present disclosure also provides a winding device for winding a tube, comprising:

a gas-feeding inlet configured to feed a gas into a hollow of the tube;
one or more filters provided downstream of the gas-feeding inlet and configured to remove a contaminant in the gas fed from the gas-feeding inlet;
a tube-connecting port provided downstream of the one or more filters and configured to connect the tube thereto; and
a winding reel configured to wind the tube thereon.

In the winding device of the present disclosure, the following are preferable: two or more of the filters linked to each other in series are included, and the filters have different filtration accuracies.

Preferably, the winding device of the present disclosure further includes a rotatable joint provided downstream of the gas-feeding inlet and upstream of the one or more filters.

The present disclosure also provides a winding device for winding a tube, comprising:

a gas-feeding inlet configured to feed a gas into a hollow of the tube;
a lead tube connected to the gas-feeding inlet, wherein the lead tube is for joining the head end of the tube before being wound to the gas-feeding inlet; and
a winding reel configured to wind the lead tube thereon.

In the winding device of the present disclosure, the lead tube preferably has a length of 3 m or more.

The present disclosure also provides a tube with both ends thereof sealed, comprising a melt-fabricable fluororesin, wherein a gas that has passed through a filter is filled into a hollow of the tube.

In the tube of the present disclosure, the both ends are preferably melt-sealed.

The tube of the present disclosure preferably has an inner surface that has not brought into contact with a gas that had not passed through a filter.

The tube of the present disclosure preferably has a length of 25 m or more.

The tube of the present disclosure is preferably wound onto a winding reel.

EFFECTS OF INVENTION

The present disclosure can provide a method for producing a tube, the method enabling the producing of a tube having a clean inner surface and excellent dimensional stability with high productivity, while keeping the inner surface clean easily, and devices for use in the production method.

The present disclosure can also provide a tube that can be handled with the inner surface thereof kept clean.

BRIEF DESCRIPTION OF DRAWINGS

Figure 1 is a schematic side view of a tube-producing system.
Figure 2 is a schematic cross-sectional view of an extruder.
Figure 3 is a schematic cross-sectional view showing the form of a gas-introducing entrance of a conventional mold.
Figure 4 is a schematic cross-sectional view of a back-flow prevention device to be incorporated into an extruder.
Figure 5 is a schematic front view of a winding device.
Figure 6 is a view for illustrating an exemplary method for connecting a head end of a lead tube to a head end of a melt-fabricable fluororesin extruded from a mold.
Figure 7 is a schematic cross-sectional view showing an embodiment of a tube with both ends thereof melt-sealed.

DESCRIPTION OF EMBODIMENTS

Specific embodiments of the present disclosure will now be described in detail, but the present disclosure is not limited to the embodiments below.

In the production method of the present disclosure, a tube is produced by melting and extruding a melt-fabricable fluororesin from a mold of an extruder into a form of a tube,

leading the melt-fabricable fluororesin extruded from the mold of the extruder into the form of a tube to a cooling device to cool the melt-fabricable fluororesin, and
winding the cooled tube onto a winding reel using a winding device.

In the production method of the present disclosure, a gas is fed from a head end of the tube wound onto the winding reel into a hollow of the tube, and the gas in the hollow is allowed to pass through a gas-introducing entrance of the mold and then through a gas-discharging hole of the mold to discharge the gas outside, thereby allowing the gas to flow along the hollow, and

an internal pressure of the hollow is kept higher than atmospheric pressure and lower than 0.5 kgf/cm$^2$.

In this way, the shape of the tube before cooling for solidification (tube between the mold and the cooling device) can be maintained, and at the same time, contaminants contained in the hollow of the tube can be discharged from the hollow. Furthermore, the cooled tube is wound on the winding reel, and the inner surface of the tube in the wound state on the winding reel can also be kept clean by allowing the gas to flow from the winding reel side toward the mold. Even if the mold corrodes, contaminants caused by the corrosion of the mold is discharged from the mold to the outside, and thus are not adhered to the inner surface of the tube.

Patent Document 1 discloses that clean air is fed, for purging, from a head end of an advanced tube into the tube. In such a conventional method, it is difficult to remove contaminants (e.g., volatiles generated from a melt-fabricable fluororesin) that have adhered to the inner side of the tube. If contaminants adhere to a melt-fabricable fluororesin in a melted state, the adhesion thereof to the inner surface is extremely strong, and if it is attempted to blow away the adhering contaminants by a gas flow, it is needed to use a high-pressure gas flow. Before cooling to solidify a melt-fabricable fluororesin in a melted state, the tube is very soft and deformable, and accordingly, if a high-pressure gas is allowed to flow into the hollow of a tube, variations in the thickness and diameter of the tube may be caused to fail to produce a tube with excellent dimensional stability. In addition, such a conventional method needs a large site in order to produce a long tube, and furthermore, since the head end of the advanced tube continuously moves every second, it is difficult to continuously feed clean air into the tube.

In the production method of the present disclosure, since the internal pressure of the hollow is kept higher than atmospheric pressure and lower than 0.5 kgf/cm$^2$, a tube having a clean inner surface and excellent dimensional stability can be easily produced while the shape of the melt-fabricable fluororesin in a melted state extruded into the form of a tube is maintained.

Furthermore, in the production method of the present disclosure, a winding reel is used to wind the tube after cooling onto the winding reel while a gas is fed from the head end of the wound tube, and accordingly, a long tube having a clear inner surface can be easily produced. In addition, since no ambient air is allowed to flow into the hollow of the tube during the production, no contaminants in the ambient air adhere to the inner surface of the tube during the production, and accordingly, the clean inner surface is kept even without purging with a high-pressure gas flow.

Furthermore, the gas fed from the head end of the wound tube passes through the mold and is discharged outside. Since the melt-fabricable fluororesin in a melted state tends to corrode metals, molds used for extrusion of the melt-fabricable fluororesin may be corroded. From a corroded mold, contaminants such as metal components are generated. In the production method of the present disclosure, if a molded is corroded, contaminants generated due to the corrosion of the mold are discharged from the mold to the outside so that the contaminants do not flow into the hollow of a tube extruded from the mold, and thus a tube having a clean inner surface can be produced.

In the present disclosure, contaminants include volatiles generated from a melt-fabricable fluororesin, metal substances, particles, and organic materials such as a plasticizer present in the ambient air.

Embodiments of the production method of the present disclosure and embodiments of devices for use in the production method will now be described with reference to drawings.

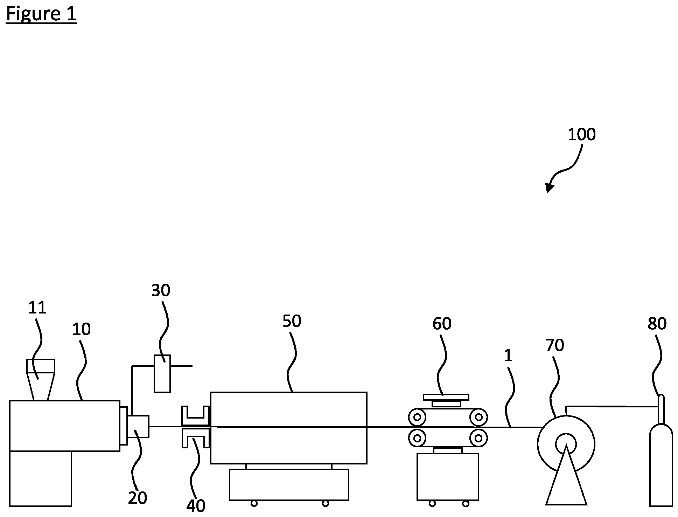

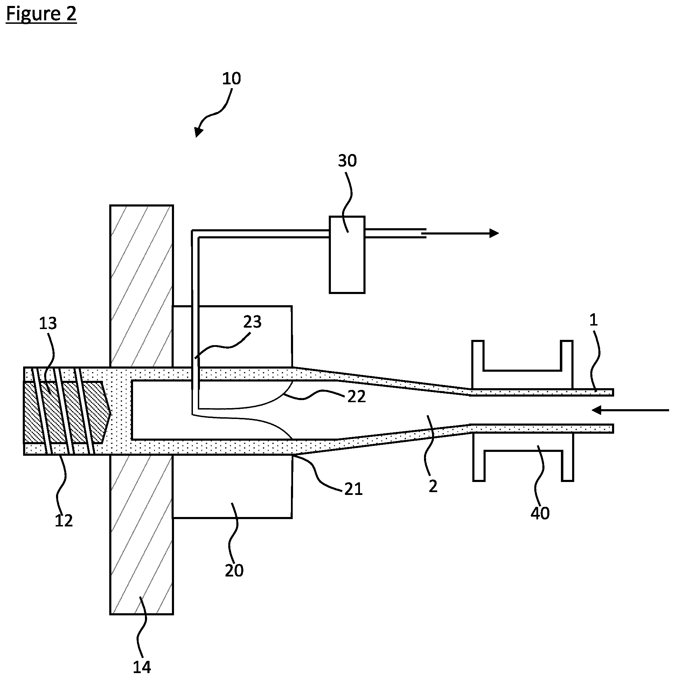

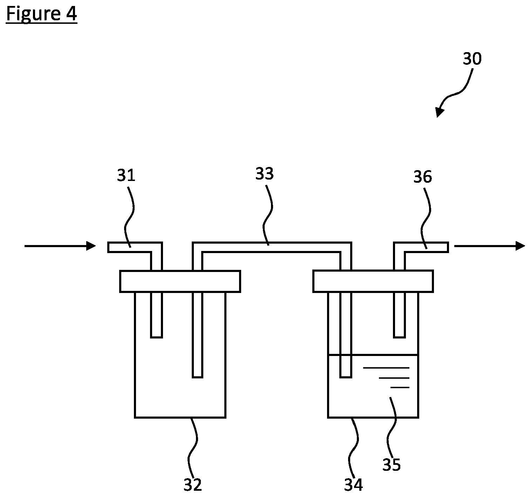

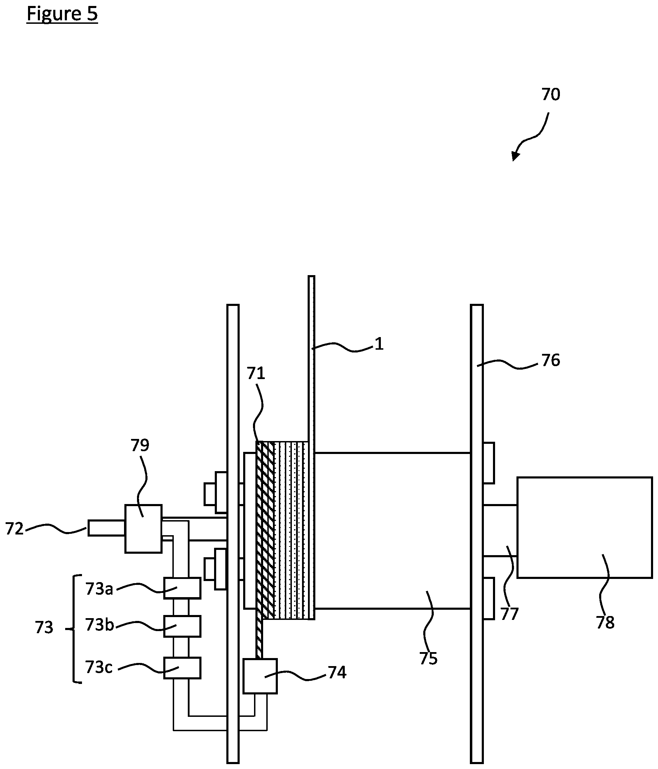

Figure 1 is a schematic side view of a tube-producing system. Figure 2 is a schematic cross-sectional view of an extruder. Figure 4 is a schematic cross-sectional view of a back-flow prevention device to be incorporated into an extruder. Figure 5 is a schematic front view of a winding device.

The tube-producing system 100 shown in Figure 1 includes an extruder 10 configured to melt and extrude a melt-fabricable fluororesin into the form of a tube; a sizing die 40 configured to define the outer diameter of the extruded tube in a melted state; a cooling water pool 50 configured to cool the tube in the melted state to solidify the tube; a drawing machine 60 configured to draw the cooled tube of the melt-fabricable fluororesin; a winding device 70 configured to wind the tube advanced from the drawing machine; and a gas-feeding device 80 configured to feed a gas to the winding device 70.

In the tube-producing system 100, a melt-fabricable fluororesin fed from a hopper 11 of the extruder 10 is melted in a cylinder 12 of the extruder 10, and by rotation of a screw 13, the melted melt-fabricable fluororesin is extruded from the mold 20 into the form of a tube. The extruded melt-fabricable fluororesin in the form of a tube in a melted state passes through the sizing die 40 to define the external profile thereof. The melt-fabricable fluororesin that has passed through the sizing die 40 is cooled in the cooling water pool 50, then passes through the drawing machine 60 configured to draw the cooled tube of the melt-fabricable fluororesin, and wound by the winding device 70 onto a winding reel 75 included in the winding device. At this time, the drawing speed (line speed) is generally 30 to 150 cm/min, and may be 30 to 120 cm/min.

The melt-fabricable fluororesin in the form of a tube in a melted state during convey between the mold 20 and the sizing die 40 is particularly soft and easily deformed. Accordingly, it is necessary to feed the gas into the hollow of the tube at a pressure such that the deformation of the tube is suppressed while adhesion of contaminants to the inner surface of the tube is suppressed. The internal pressure (gauge pressure) of the hollow is higher than atmospheric pressure and lower than 0.5 kgf/cm$^2$. The internal pressure is preferably 0.4 kgf/cm$^2$ or less, more preferably 0.3 kgf/cm$^2$ or less, and preferably 0.1 kgf/cm$^2$ or more, more preferably 0.2 kgf/cm$^2$ or more. As a result of studies of the present inventors, it has been experimentally confirmed that when the internal pressure of the hollow is adjusted so as to fall within the above-described range, a tube having a desirable shape can be stably produced while contamination of the inner surface of the tube is suppressed. If the internal pressure of the hollow is too low or too high, deformation of the tube cannot be suppressed sufficiently.

As shown in Figures 1 and 2, the extruder 10 includes: a hopper 11 configured to feed the melt-fabricable fluororesin into a cylinder; the cylinder 12 configured to melt the melt-fabricable fluororesin; a screw 13 housed in the cylinder and configured to extrude the melt-fabricable fluororesin; an adopter 14 configured to join the cylinder to a mold; and the mold 20 configured to mold the extruded melt-fabricable fluororesin in a melted state into the form of a tube.

As shown in Figure 2, the mold 20 includes: a resin discharge outlet 21 configured to discharge the melt-fabricable fluororesin into the form of a tube; a gas-introducing entrance 22 configured to introduce the gas in the hollow 2 of the melt-fabricable fluororesin in the form of a tube to a gas-discharging hole of the mold; and the gas-discharging hole 23 configured to discharge the gas introduced from the gas-introducing entrance to the outside of the mold.

The extruder 10 further includes a back-flow prevention device 30. The back-flow prevention device 30 is connected to the gas-discharging hole 23 of the mold 20 to discharge the gas to the outside of the extruder 10 and also to prevent the back-flow of the gas.

As the back-flow prevention device 30, a check valve or a bubbling device can be used, for example. Figure 4 is a view showing an embodiment of the back-flow prevention device 30. The back-flow prevention device 30 shown in Figure 4 is a bubbling device, which includes: a gas-introducing pipe 31 connected to the gas-discharging hole 23 of the mold 20; a first container 32 configured to collect contaminants in the gas introduced through the gas-introducing pipe; a pipe 33 configured to connect the first container to a second container; the second container 34 configured to cause bubbling by the gas introduced from the pipe 33; a liquid 35 housed in the second container; and another pipe 36 configured to discharge the gas that has caused the bubbling in the second container. One end of the pipe 33 is positioned lower than the water level of the liquid 35 housed in the second container 34, and one end of the pipe 36 is positioned higher than the water level of the liquid 35 housed in the second container 34. The water level of the liquid 35 can be adjusted as appropriate. The kind of the liquid 35 is not limited, and may be water, for example.

In the back-flow prevention device 30 shown in Figure 4, the liquid 35 housed in the second container 34 prevents the free coming and going of the gas present in the pipe 33 and the gas present in the second container 34. When the internal pressure in the tube is kept higher than atmospheric pressure during the extrusion of the tube, the higher pressure is kept by the liquid 35 housed in the second container 34 so that the pressure of the gas present in the pipe 33 is also higher than atmospheric pressure, and accordingly, the gas from the pipe 33 is blown into the liquid 35 housed in the second container 34 to generate bubbles. The gas as bubbles that has passed thorough the liquid 35 passes through the pipe 36 to discharge to the outside of the extruder. Once stopping the extrusion of the tube and the feeding of the gas from the head end of the tube wound onto the winding reel, the internal pressure of the tube gradually returns to atmospheric pressure; however, the liquid 35 housed in the second container 34 prevents the back-flow of the gas in the second container 34 to the first container 32. Thus, air does not flow into the hollow 2 of the tube 1 obtained by the extrusion from the extruder 10, and accordingly, contaminants in air do not adhere to the inner surface of the tube even after the stop of the feeding of the gas from the head end of the tube, so that the inner surface is kept clean.

The back-flow prevention device 30 further includes the first container 32, whereby contaminants discharged from the extruder (particularly, volatiles generated from a melt-fabricable fluororesin) are trapped to prevent the clogging up of the pipe 33 with the contaminants. Although the gas-introducing pipe 31 may also be clogged with contaminants, the gas-introducing pipe 31 can be provided with and heated by a heater to prevent adhesion of contaminants.

In the mold 20, the gas-introducing entrance 22 is inversely tapered. Thus, the gas-introducing entrance 22 is formed such that the gas-introducing entrance 22 has an opening with a diameter gradually increasing from the gas-discharging hole 23 toward the gas-introducing entrance 22, whereby adhesion of contaminants around the gas-introducing entrance 22 is reduced. The form of the gas-introducing entrance 22 is not limited to the inversely tapered form, and may be a stepwise form.

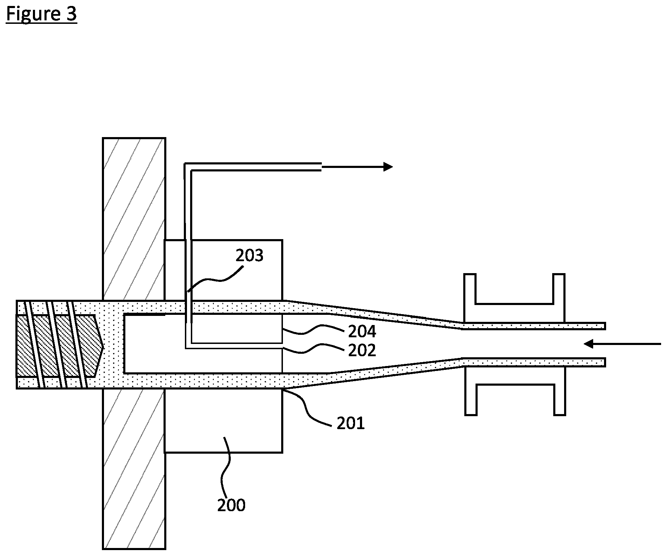

Figure 3 is a schematic cross-sectional view showing the form of a gas-introducing entrance of a conventional mold. A conventional mold 200 has a gas-discharging hole 203 that has a uniform diameter, and the opening of a gas-introducing entrance 202 also has the same diameter as of the gas-discharging hole. Accordingly, an exposed surface 204, which is surrounded by the resin discharge outlet 201, is formed around the gas-introducing entrance 202. A gas collides, in the vertical direction to the exposed surface 204, against the exposed surface 204, and in addition, the gas tends to accumulate on and around the exposed surface 204. Thus, contaminants contained in the hollow of the tube (e.g., volatiles generated from a melt-fabricable fluororesin) tend to adhere to the exposed surface 204, which is problematic. If contaminants accumulate on the exposed surface 204, they adhere to the melt-fabricable fluororesin in a melted state discharged from the resin discharge outlet 201 and are incorporated as foreign matter into the tube to be finally obtained, which results in a failure in molding.

As shown in Figure 2, the mold 20 is formed such that the diameter of the opening gradually increases from the gas-discharging hole 23 toward the gas-introducing entrance 22, and accordingly, when the gas fed from the head end of the tube wound onto the winding reel reaches the mold 20, the gas is smoothly introduced to the gas-discharging hole 23 without accumulating on and around the gas-introducing entrance 22 of the mold 20. Thus, the gas fed into the tube is smoothly discharged outside with the contaminants included, and therefore, the contaminants can be effectively prevented from adhering on and around the gas-introducing entrance 22 to suppress occurrence of failure in molding.

The diameter of the opening of the gas-introducing entrance is not limited; however, when the diameter of the opening of the gas-introducing entrance 22 is almost equal to the inner diameter of the resin discharge outlet 21, there is almost no exposed surface, as shown in Figure 2, and the contaminants can be more highly prevented from adhere on and around the gas-introducing entrance 22.

The tube-producing system 100 includes a winding device 70. Figure 5 is a view showing an embodiment of the winding device 70. The winding device 70 shown in Figure 5 is a winding device for winding the tube 1 and includes: a gas-feeding inlet 72 configured to feed a gas into the hollow of the tube 1; a filter 73 provided downstream of the gas-feeding inlet 72 and configured to remove a contaminant in the gas fed from the gas-feeding inlet 72; a tube-connecting port 74 provided downstream of the filter 73 and configured to connect the tube 1 thereto; and a winding reel 75 configured to wind the tube thereon.

The winding reel 75 is rotatably supported on a rotation axis 77 provided on a supporting column 76 of a supporting mount, and when an actuating device 78 is actuated, the winding reel 75 rotates with the rotation axis 77 to wind the tube 1. One end of the tube 1 is connected to the tube-connecting port 74 via a lead tube 71. The gas is fed from the tube-connecting port 74 into the hollow of the tube 1. The tube 1 is wound onto the winding reel 75 while the gas is allowed to flow into the hollow.

The gas-feeding inlet 72 is connected to a gas-feeding device 80. The gas-feeding device 80 may be a gas cylinder filled with a high-pressure gas, as shown in Figure 1, or may be a compressor, a blower, or the like. The gas-feeding device 80 may be provided with a needle valve (not shown) to adjust the pressure of the gas fed. The needle valve may be conveniently opened and closed to adjust the pressure as appropriate while checking the amount of bubbles generated in the back-flow prevention device 30.

The tube-connecting port 74 is connected to the gas-feeding inlet 72 via the filter 73. The gas that has passed through the filter 73 can be fed into the hollow of the tube 1 to thereby produce a tube having a clean inner surface.

The kind of the gas fed into the hollow of the tube 1 is not limited, and may be, for example, an inert gas, such as nitrogen gas, argon gas, or helium gas, air, oxygen gas, or halogen gas. Air is preferable in view of reduction in cost. In a case where gas that has passed through a filter is used as the gas to be fed into the hollow, a tube having a clean inner surface can be produced even when the kind of the gas is air.

The filtration accuracy of the filter is not limited, and preferably 30 nm or less, more preferably 10 nm or less, even more preferably 5 nm or less, and particularly preferably 3 nm or less. If the filtration accuracy of the filter is too low, the resistance of the gas may increase too much, or the filter may be easily clogged with contaminants in the gas, disadvantageously. Thus, the filtration accuracy of the filter is preferably 1 nm or more.

The trapping efficiency of the filter is not limited. The filter is preferably a filter that traps 99.99 % or more of particles having a size of 30 nm or more, more preferably a filter that traps 99.99 % or more of particles having a size of 10 nm or more, even more preferably a filter that traps 99.99 % or more of particles having a size of 5 nm or more, and particularly preferably a filter that traps 99.99 % or more of particles having a size of 3 nm or more.

In Figure 5, the first filter 73a, the second filter 73b, and the third filter 73c are provided and linked to each other in series. The number of filters is not limited, and one or more filters can be provided. When two or more of the filters linked to each other in series are provided, a gas having even higher cleanness can be easily fed into the hollow of the tube 1. In a case where two or more filters are provided, the filters provided may be different in the filtration accuracy or the trapping efficiency to each other, whereby a gas having even higher cleanness can be easily fed into the hollow of the tube 1.

For example, a filter having lower filtration accuracy may be provided upstream, and a filter having higher filtration accuracy may be provided downstream thereof. In Figure 5, in which the first filter 73a, the second filter 73b, and the third filter 73c are provided, a filter having a filtration accuracy more than 10 nm and 30 nm or less, a filter having a filtration accuracy more than 5 nm and 10 nm or less, and a filter having a filtration accuracy more than 5 nm or less can be used as the first filter 73a, the second filter 73b, and the third filter 73c, respectively.

A filter may be provided that removes impurities from the gas by a mechanism like chemical adsorption. Such a filter may also be referred to as a chemical filter. For example, a chemical filter can be provided upstream of a filter that physically removes impurities from the gas as described above.

The winding device 70 further includes a rotatable joint 79 provided downstream of the gas-feeding inlet 72 and upstream of the filter(s). The gas introduced from the gas-feeding inlet 72 passes through the hollow of the rotatable joint 79 and reaches the tube-connecting port 74 to feed the gas into the hollow of the tube 1. The gas that has passed through the rotatable joint 79 may contain contaminants, such as fine particles, generated through the friction due to the rotation of the rotatable joint 79. The contaminants generated from the rotatable joint 79 can be filtered off by the filter 73 provided downstream of the rotatable joint 79, and thus the tube 1 can be wound onto the winding reel 75 while a gas having an even higher cleanness is fed into the hollow of the tube 1.

The winding device 70 further includes a lead tube 71 with one end connected to the tube-connecting port 74 and the other end connected to the tube 1. The gas is fed into the hollow of the lead tube 71 from the tube-connecting port 74, and the gas is also fed into the hollow of the tube 1 connected to the lead tube 71.

In the winding device 70 shown in Figure 5, one end of the lead tube 71 is connected to the tube 1; however, the one end of the lead tube 71 is not connected to the tube 1 before the start of the extrusion of the melt-fabricable fluororesin. While the gas is fed into the lead tube 71 with the head end of the lead tube 71 exposed, the lead tube 71 is reeled-out from the winding reel 75 and allowed to pass through the drawing machine 60, the cooling water pool 50, and the sizing die 40 to reach the near side of the mold 20. With the lead tube 71 reeled-out from the winding device 70 to the mold 20 in this manner, the head end of the lead tube 71 is connected to the head end of the melt-fabricable fluororesin extruded from the mold 20. At this time, while the gas is fed into the lead tube 71 to flow out from the head end of the lead tube 71, the head end of the lead tube 71 is connected to the head end of the melt-fabricable fluororesin extruded from the mold 20 to feed the gas into the hollow of the tube 1 in a melted state. The clean gas is continuously fed into the hollow of the tube 1 in a melted state connected to the head end of the lead tube 71, once the tube 1 is connected to the head end of the lead tube 71, and thus, the contact of the inner surface of the tube with air can be suppressed to the minimum while the shape of the hollow of the tube is maintained by the pressure of the gas fed.

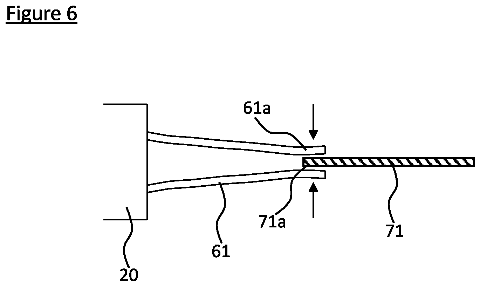

Figure 6 is a view for illustrating an exemplary method for connecting the head end of the lead tube 71 to the head end of the melt-fabricable fluororesin extruded from the mold 20. As shown in Figure 6, the head end 71a of the lead tube 71 reeled-out from the winding device 70 is inserted into the head end 61a of the melt-fabricable fluororesin 61 in a melted state extruded from the mold 20. With the head end 71a of the lead tube 71 inserted into the head end 61a of the melt-fabricable fluororesin 61, the head end 61a is nipped with tweezers or the like to weld to the head end 71a. By such a method, the head end of the lead tube 71 can be connected to the head end of the melt-fabricable fluororesin while the gas is allowed to flow out from the head end 71a of the lead tube 71.

After the head end of the lead tube 71 is connected to the head end of the melt-fabricable fluororesin extruded from the mold 20, continuous extrusion of the melt-fabricable fluororesin from the mold 20 and the winding of the lead tube 71 and the cooled tube 1 are started. In this way, a long tube with its inner surface kept clean can be produced with high productivity.

The length of the lead tube 71 is not limited and may be the same length as, or a longer length than, the distance from the winding device 70 to the mold 20. The length of the lead tube 71 may be 3 m or more, or 5 m or more, and 100 m or less.

The material for forming the lead tube 71 is not limited and may be a material having flexibility for winding onto the winding reel smoothly. It is preferable to use a lead tube including a melt-fabricable fluororesin, in view of easily welding to the melt-fabricable fluororesin in a melted state.

When a tube having a desired length has been produced, the extrusion of the melt-fabricable fluororesin and the winding of the tube are stopped. After stopping the extrusion of the melt-fabricable fluororesin, the tube can be melt-sealed and cut at two arbitrary point therein, to thereby produce a tube filled with the gas. The inner surface of the tube obtained by such a production method is extremely clean since it has never been brought into contact with air.

Even if a tube having a clean inner surface is produced by allowing a gas to flow into the hollow of the tube and thus suppressing the adhesion of contaminants to the inner surface of the tube, air may flow into the hollow of the tube upon, for example, packing, shipping, transportation, or use of the tube so that contaminants in the air may adhere to the inner surface of the tube. Thus there is a risk that the clean inner surface cannot be kept. Although a considerable period of time is generally needed from the production of a tube to actual use thereof, it is difficult for a tube obtainable by a conventional production method to keep the clean inner surface thereof.

By melt-sealing and cutting the tube at two arbitrary point therein after completion of the molding, a tube with a clean inner surface can be produced easily. Furthermore, in a case where the melt-fabricable fluororesin is molded while a gas that has passed through a filter is fed, a clean gas can be filled into the tube without contact of a gas that has not passed through a filter with the inner surface of the tube. Furthermore, the tube may be melt-sealed at two arbitrary point therein while the internal pressure upon molding is kept, whereby the inner surface of the tube can be kept even cleaner. The clean inner surface is kept, until the tube is cut to a desired length upon use to result in allowing air to flow into the hollow through the cut orifice.

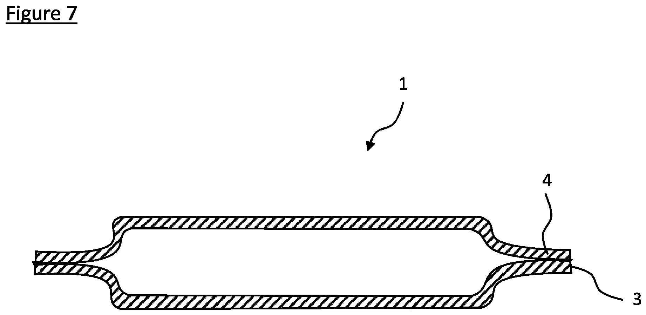

Figure 7 is a schematic cross-sectional view showing an embodiment of a tube 1 with both ends thereof melt-sealed. In the tube 1 shown in Figure 7, melt-sealed portions 4 are formed around the respective cut surfaces 3, which are exposed on the both ends, and the hollow of the tube 1 is thus sealed.

The position of the melt-sealed point in the tube is not limited. For example, the tube can be melt-sealed at a point between the mold 20 and the sizing die 40, and also melt-sealed at another point near the connection to the lead tube 71, so that the tube can be produced without waste. When the melt-fabricable fluororesin of the tube is in a melted state at the point where the tube is to be melt-sealed, the tube can be nipped with tweezers or the like to be melt-sealed. If the tube has been cooled and solidified at the point where the tube is to be melt-sealed, the tube can be heated with a heat gun or the like to melt selectively at the point to be melt-sealed, and the tube can be nipped with tweezers or the like at this point to achieve melt-sealing.

The distance between the melt-sealed points is not limited, and the positions of the points to be melt-sealed can be selected so as to obtain a tube with a desired length. Specifically, according to the production method of the present disclosure, a tube can be easily produced that preferably has a length of 25 m or more, more preferably 30 m or more, and more preferably 40 m or more. The upper limit of the length is not limited, and can be 500 m.

After melt-sealing the tube at two arbitrary points, the full length of the tube can be wound onto the winding reel 75, and the winding reel 75 can be detached from the supporting mount, thereby obtaining the tube wound onto the winding reel.

In this way, a tube including a melt-fabricable fluororesin with both ends thereof sealed can be obtained, the hollow of the tube being filled with a gas that has passed through a filter.

The gas that has passed through a filter is preferably a gas that has passed through a filter having a filtration accuracy of 30 nm or less. The filtration accuracy of the filter is not limited and preferably 10 nm or less, more preferably 5 nm or less, and even more preferably 3 nm or less.

It can be considered that a tube filled with a gas that has passed through a filter having a filtration accuracy of 5 nm or less is filled with a gas from which particles have been trapped at a trapping efficiency of 99% or more. Specifically, as studies about nanoparticles in air, there are many studies about nanoparticles having a size of 5 to 500 nm due to the performance limit of measurement devices. In a distribution in terms of the number of particles, there is a peak within a size range of tens of nanometers, and it is said that the number of particles having a size of tens of nanometers in air is about tens of thousands to tens of millions per cubic centimeter. When the trapping efficiency of the filter is 99%, the number of particles having a size of tens of nanometers in a gas after filtration is hundreds to tens of thousands per cubic centimeter, and when the trapping efficiency of the filter is 99.99%, the number of particles having a size of tens of nanometers in a gas after filtration is 1 to 1000/cc. When two filters having a trapping efficiency of 99% are installed in series, the number of particles having a size of tens of nanometers in a gas after filtration is 1 to 1000/cc. Namely, when air is allowed to pass through a filter for 5 nm size, the number of particles having a size of 5 nm or more can reach 1000/cc or less, preferably 500/cc or less, and more preferably 100/cc or less.

The trapping efficiency of a commercially available filter is generally determined by allowing a large volume of contaminated gas to pass through it and measuring the number of fine particles in the resulting concentrated gas. In principle, for a tube filled with a gas, the number of particles in the gas filled can be grasped by collecting the gas from the tube filled with the gas and measuring the number of particles in the gas. However, since the volume of the inner space of a tube is small, it is difficult to collect a gas in an amount enough to concentrate to a measurable concentration for measuring the number of particles in the gas in the tube. The present inventors now suggest a method for measuring, in a liquid, the number of fine particles present inside the tube. Specifically, in this method, a solvent, such as ultrapure water or an alcohol from which fine particles have been removed with a filter, is filled into a tube, and then the number of particles is measured using, for example, a light-scattering type liquid-borne particle sensor KS-19F, manufactured by RION Co., Ltd. The particle size measurable by a liquid-borne particle counter is 30 nm or more. For the production method of the present disclosure and the tube of the present disclosure, particles having such a size are removed with the filter(s), and it is supposed that the concentration thereof is too low to measure, in principle. Although it is necessary to sufficiently pay attention to secondary contamination in the operation to measure the number of particles, it can be confirmed that in a case where the production method of the present disclosure is used, a tube having an extremely clean inner surface can be produced compared with a case where a current method for producing a tube is used.

Although the method for producing a tube with both ends thereof melt-sealed has been described in the above embodiment, the method for sealing the tube is not limited to melt-sealing, and caps or the like can be provided at both ends to thereby fill a gas that has passed through a filter into the hollow of the tube. However, it is necessary to produce a tube by the above-described production method, for obtaining tube having an inner surface that has never been brought into contact with a gas that did not pass through a filter, and accordingly, a tube with both ends thereof melt-sealed is suitable for a case where a tube having a cleaner inner surface is needed.

The melt-fabricable fluororesin for forming the tube is a fluororesin having melt-fabricability. In the present disclosure, the term "melt-fabricable" means that it is possible to melt and fabricate the polymer using a conventional processing device, such as an extruder or an injection molding machine. Accordingly, the melt-fabricable fluororesin usually has a melt flow rate of 0.01 to 500 g/10 min as measured by the measurement method described later.

The fluororesin preferably has a melt flow rate (MFR) of 0.5 to 500 g/10 min, more preferably 1 to 50 g/10 min, and even more preferably 2 to 40 g/10 min.

The MFR is measured under a load of 5 kg at an arbitrary temperature (for example, 372°C) within a range from about 230 to 400°C, which is a general temperature for molding a fluororesin, using a die having a diameter of 2.1 mm and a length of 8 mm in accordance with ASTM D-1238.

The melting point of the fluororesin is not limited, and preferably 100 to 324°C, and more preferably 220 to 315°C. The melting point is a temperature corresponding to the maximum value in the heat-of-fusion curve when raising the temperature at a rate of 10°C/min using a differential scanning calorimeter (DSC).

Examples of the melt-fabricable fluororesin include tetrafluoroethylene/fluoroalkyl vinyl ether copolymer, tetrafluoroethylene (TFE)/hexafluoropropylene (HFP) copolymer, TFE/ethylene copolymer [ETFE], TFE/ethylene/HFP copolymer, ethylene/chlorotrifluoroethylene (CTFE) copolymer [ECTFE], polychlorotrifluoroethylene [PCTFE], CTFE/TFE copolymer, polyvinylidene fluoride [PVdF], TFE/vinylidene fluoride (VdF) copolymer [VT], polyvinyl fluoride [PVF], TFE/VdF/CTFE copolymer [VTC], and TFE/HFP/VdF copolymer.

Among these, tetrafluoroethylene (TFE)/fluoroalkyl vinyl ether (FAVE) copolymer is preferable as the melt-fabricable fluororesin, since it has excellent chemical resistance, heat resistance, and crack resistance.

A problem of TFE/FAVE copolymer is that it is difficult to produce a tube having a clean inner surface from TFE/FAVE copolymer since the molding temperature therefor is high. Using the production method of the present disclosure enables production of a tube including TFE/FAVE copolymer and having a clean inner surface with high productivity.

The above-described TFE/FAVE copolymer is not limited, and is preferably a copolymer having a molar ratio between the TFE unit and the FAVE unit (TFE unit/FAVE unit) of 70/30 or more and less than 99/1. The molar ratio is more preferably 70/30 or more and 98.9/1.1 or less, and even more preferably 80/20 or more and 98.9/1.1 or less. If the ratio of the TFE unit is too small, the mechanical property tends to be poor, and if it is too large, the melting point tends to be too high, which results in poor moldability.

The above-described TFE/FAVE copolymer is preferably a polymer that includes 0.1 to 10 mol% of a monomer unit derived from a monomer copolymerizable with TFE and FAVE and 90 to 99.9 mol% in total of the TFE unit and the FAVE unit.

Examples of the monomer copolymerizable with TFE and FAVE include: HFP; a vinyl monomer represented by $CZ^3Z^4=CZ^5(CF_2)_nZ^6$, wherein $Z^3$, $Z^4$, and $Z^5$ are the same or different from each other and represent H or F, $Z^6$ represents H, F, or Cl, and n represents an integer of 2 to 10; and an alkyl perfluorovinyl ether derivative represented by $CF_2=CF-OCH_2-Rf^7$, wherein $Rf^7$ represents a perfluoroalkyl group having 1 to 5 carbon atoms. Among these, HFP is preferable.

The TFE/FAVE copolymer is preferably at least one selected from the group consisting of a copolymer consisting of a TFE unit and a FAVE unit, and the above-described TFE/HFP/FAVE copolymer, and more preferably the copolymer consisting of a TFE unit and a FAVE unit.

The TFE/FAVE copolymer preferably has a melting point of 280 to 322°C, more preferably 290°C or more, even more preferably 295°C or more, and particularly preferably 300°C or more, and more preferably 315°C or less. The melting point can be measured using a differential scanning calorimeter (DSC).

The TFE/FAVE copolymer preferably has a glass transition temperature (Tg) of 70 to 110°C, more preferably 80°C or more, and more preferably 100°C or less. The glass transition temperature can be determined through measurement of the dynamic viscoelasticity.

The TFE/FAVE copolymer preferably has a melt flow rate (MFR) at 372°C is preferably 0.1 to 100 g/10 min, more preferably 0.5 g/10 min or more, even more preferably 1 g/10 min or more, and more preferably 80 g/10 min or less, even more preferably 40 g/10 min or less, particularly preferably 30 g/10 min or less.

The TFE/FAVE copolymer is preferably a copolymer having a small number of functional groups, in view of obtaining a cleaner tube and being excellent in moldability. The number of the functional groups is preferably 400 or less in total per $10^6$ carbon atoms. The number of the functional groups is more preferably 200 or less, even more preferably 200 or less, particularly preferably 50 or less, and further preferably 15 or less, per $10^6$ carbon atoms.

The above-described functional groups include a functional group present at a terminal of the main chain or that at a terminal of a side chain in the TFE/FAVE copolymer, and a functional group present in the main chain or that in the side chain. The functional group is preferably at least one selected from the group consisting of $-CF=CF_2$, $-CF_2H$, -COF, -COOH, $-COOCH_3$, $-CONH_2$, and $-CH_2OH$.

Infrared spectroscopy can be used for the characterization of the kinds of the functional groups and the determination of the number of the functional groups.

Specifically, the number of the functional groups is determined by the following method. First, the TFE/FAVE copolymer is melted at 340 to 350°C for 30 minutes, and compression-molded to prepare a film having a thickness of 0.05 to 0.25 mm. The film is analyzed by Fourier-transform spectroscopy to obtain an infrared absorption spectrum of the TFE/FAVE copolymer, and a difference spectrum between the resulting spectrum and a base spectrum of a completely fluorinated copolymer with no functional group is obtained. From absorption peaks of specific functional groups exhibited in the difference spectrum, the number of the functional groups per $1\times10^6$ carbon atoms of the TFE/FAVE copolymer, N, is calculated using the following equation (A).

$$N = I \times K / t \quad (A)$$

I: Absorbance
K: Correction factor
t: Thickness of film (mm)

For reference, Table 1 shows the absorption frequency, the molar absorption coefficient, and the correction factor of the functional groups in the present disclosure. These molar absorption coefficients are those determined from FT-IR data of model compounds with a low molecular weight.

[Table 1]

Table 1

| Functional group | Absorption frequency (cm$^{-1}$) | Molar absorption coefficient (l/cm/mol) | Correction factor | Model compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

The absorption frequencies of -CH$_2$CF$_2$H, -CH$_2$COF, -CH$_2$COOH, -CH$_2$COOCH$_3$, and -CH$_2$CONH$_2$ are lower than the absorption frequencies of -CF$_2$H, -COF, -COOH free and -COOH bonded, - COOCH$_3$, and -CONH$_2$, respectively, which are shown in the table, by tens of kayser (cm$^{-1}$).

Accordingly, the number of, for example, the functional groups -COF is the total of the number of the functional groups determined from the absorption peak at an absorption frequency of 1883 cm$^{-1}$, which are assigned to -CF$_2$COF, and the number of the functional groups determined from the absorption peak at an absorption frequency of 1840 cm$^{-1}$, which are assigned to -CH$_2$COF.

The number of the functional groups may be the total number of -CF=CF$_2$, -CF$_2$H, -COF, -COOH, -COOCH$_3$, -CONH$_2$, and - CH$_2$OH.

The functional groups are introduced into the TFE/FAVE copolymer by, for example, a chain transfer agent or a polymerization initiator used when the TFE/FAVE copolymer is produced. For example, in a case where an alcohol is used as a chain transfer agent or a case where a peroxide having a structure -CH$_2$OH is used as a polymerization initiator, -CH$_2$OH is introduced into the terminal of the main chain of the TFE/FAVE copolymer. When a monomer having a functional group is polymerized, the functional group is introduced into the terminal of the side chain of the TFE/FAVE copolymer.

The TFE/FAVE copolymer having such a functional group can be subjected to fluorination treatment to thereby obtain the TFE/FAVE copolymer having the number of functional groups within the above-described range. Thus, the TFE/FAVE copolymer is preferably a fluorinated product. Also, the TFE/FAVE copolymer preferably has a terminal group -CF$_3$.

The fluorination treatment can be performed by bringing a non-fluorinated TFE/FAVE copolymer into contact with a fluorine-containing compound.

The fluorine-containing compound is not limited, and examples thereof include a fluorine radical source, which generate a fluorine radical under the conditions for the fluorination treatment. Examples of the fluorine radical source include F$_2$ gas, CoF$_3$, AgF$_2$, UF$_6$, OF$_2$, N$_2$F$_2$, CF$_3$OF, and a halogen fluoride (e.g., IF$_3$, ClF$_3$).

The fluorine radical source, such as $F_2$ gas, may be that having a concentration of 100%; however, the fluorine radical source is preferably mixed with an inert gas to dilute to 5 to 50 mass%, and more preferably 15 to 30 mass%, before use, from a safety viewpoint. Examples of the inert gas include nitrogen gas, helium gas, and argon gas, and nitrogen gas is preferable from an economical viewpoint.

The conditions for the fluorination treatment is not limited. The TFE/FAVE copolymer in a melted state may be brought into contact with the fluorine-containing compound, and the fluorination treatment may be performed generally at a temperature equal to or lower than the melting point of the TFE/FAVE copolymer, preferably 20 to 220°C, and more preferably 100 to 200°C. The fluorination treatment is performed generally for 1 to 30 hours, and preferably 5 to 25 hours. In the fluorination treatment, it is preferable to bring a non-fluorinated TFE/FAVE copolymer into contact with fluorine gas ($F_2$ gas).

The TFE/FAVE copolymer can be produced by, for example, a conventionally known method including mixing a monomer for giving its constituent unit and an additive, such as a polymerization initiator, as appropriate, and carrying out emulsion polymerization, suspension polymerization, or the like.

The outer diameter of the tube is not limited, and may be 2 to 100 mm, 3 to 100 mm, or 5 to 50 mm. The thickness of the tube may be 0.1 to 10 mm, or 0.3 to 5 mm.

The tube of the present disclosure can be suitably used as a tube for piping a chemical solution, which is for allowing a chemical solution to flow, and can be particularly suitably used as a tube for piping a chemical solution that is used for transferring a chemical solution with high purity for producing semiconductor devices.

In a semiconductor plant, many tubes are used for allowing ultrapure water and chemical solutions with high purity to flow to be used for producing semiconductor devices. The inner surface of the tube may be contaminated with contaminants such as fine particles present in air and polymer fumes generated upon the melt-molding of the TFE/FAVE copolymer. Particularly, nanosized contaminants adhere to the inner surface of the polymer due to Van der Waals force, an electrostatic force, or the like, and it is thus difficult to remove them with rinse water such as pure water. Accordingly, when a new tube is used in a semiconductor plant, large amounts of ultrapure water and chemical solutions and long time for cleaning are disadvantageously necessary for cleaning (brushing) the inside of the tube, for example.

Since the tube of the present disclosure has the above-described configuration, almost no contaminants adhere to the inner surface thereof, and the tube is unlikely to contaminate ultrapure water and chemical solutions with high purity used for producing semiconductor devices. Since the tube of the present disclosure exhibits such an effect, the tube is preferably a tube for piping a chemical solution for allowing the chemical solution to flow. The chemical solution may be a chemical solution used for producing semiconductors, and examples of the chemical solution include ammonia water, ozone water, hydrogen peroxide water, hydrochloric acid, sulfuric acid, a resist solution, a thinner solution, and a developer.

The tube of the present disclosure can be utilized as a tube for use in equipment for producing semiconductors or devices for producing semiconductors, including a chemical solution-feeding line for producing semiconductors, chemical solution-feeding equipment for producing semiconductors, a semiconductor-cleaning device, and a coater/developer. A chemical solution with high purity can be surely fed to a site of use, by using the tube of the present disclosure for equipment for producing semiconductors or devices for producing semiconductors. Even when producing semiconductor devices with a line width of 5 nm or less, use of the tube of the present disclosure can reduce defect and fault in the semiconductor devices due to particles or metal contaminants, so that improvement in the yield can be expected in production of semiconductor devices.

Although embodiments have been described as above, it will be appreciated that various modifications may be made on the modes and details without departing from the spirit and scope of the claims.

EXAMPLES

Embodiments of the present disclosure will now be described by way of examples, but the present disclosure is not limited only to the examples at all.

In Experimental Examples, the following resin was used as a melt-fabricable fluororesin.

PFA (1): NEOFLON (registered trademark) PFA AP-230SH, manufactured by DAIKIN INDUSTRIES, LTD.

tetrafluoroethylene/perfluoro(propyl vinyl ether) copolymer
melt flow rate (MFR): 2.0 g/10 min
melting point: 307°C

The MFR was determined by measuring the mass (g/10 min) of the copolymer flow out from a nozzle with an inner diameter of 2.1 mm and a length of 8 mm at 372°C under a load of 5 kg over 10 minutes, using a melt indexer (manufactured by YASUDA SEIKI SEISAKUSHO, LTD., in accordance with ASTM D1238.

The melting point was determined as a temperature corresponding to the maximum value in the heat-of-fusion curve when raising the temperature at a rate of 10°C/min using a differential scanning calorimeter (DSC).

Experimental Examples 1 to 5

(Molding of fluororesin tube)

A non-extended tube with an outer diameter of 6.35 mm and an inner diameter of 4.35 mm was produced from PFA (1) using the tube-producing system shown in Figure 1 under the conditions for molding shown in Table 2. As the extruder 10, a melt extruder with a screw diameter φ of 30 mm (manufactured by TANABE PLASTICS MACHINERY CO., LTD.) was used. The methods for evaluation are described below. The results of the evaluation are shown in Table 2.

(1) Possibility of feeding of gas

A gas was fed into the hollow of a tube wound on the winding reel 75 from the head end of the tube, and it was checked whether bubbles were generated in the bubbling device (back-flow prevention device 30). The generation of bubbles means that the gas fed is discharged to the outside of the mold 20 through the gas-discharging hole in the mold 20.

Evaluation criteria

[0130]

　　Yes: bubbles were found
　　No: bubbles were not found

(2) Possibility of molding of tube

The length of the non-extended tube was measured and evaluated on the criteria described below. In Experimental Example in which a tube with a length of 20 m or more was obtained, the continuously molding of a tube was achieved, and a non-extended tube was produced with high productivity. In Experimental Example in which a tube with a length less than 20 m was obtained, the tube extruded from the mold 20 was broken between the mold 20 and sizing die 40, and the continuously molding was impossible.

Evaluation criteria

[0132]

　　Yes: the length of the tube was 20 m or more
　　No: the length of the tube was less than 20 m

(3) Dimensional stability of tube

An instrument for measuring the outer diameter (manufactured by KEYENCE, product name: LS-9030) was installed between the cooling device (cooling water pool) 50 and the drawing machine 60 shown in Figure 1, and the outer diameter of the tube obtained was measured along 20 m of an arbitrary range therein and evaluated on the following criteria.

Evaluation criteria

[0134]

　　Yes: the outer diameter of the whole of the tube in the measurement range was within a range of 6.35±0.10 mm
　　No: the outer diameter of a part of the tube in the measurement range was out of a range of 6.35±0.10 mm

[Table 2]

Table 2

| | | Experimental Example 1 | Experimental Example 2 | Experimental Example 3 (Comparative) | Experimental Example 4 (Comparative) | Experimental Example 5 (Comparative) |
|---|---|---|---|---|---|---|
| Conditions for molding | | | | | | |
| Temperature of mold | °C | 380 | 360 | 380 | 360 | 360 |
| Rotating speed of screw | rpm | 4.9 | 4.2 | 4.9 | 4.2 | 4.2 |
| Drawing speed | cm/min | 40 | 41 | 40 | 41 | 41 |
| Internal pressure of hollow of tube | kgf/cm² (gauge pressure) | 0.21 | 0.45 | 0.63 | 0.76 | 0 |
| Evaluation results | | | | | | |
| Possibility of feeding of gas | | Yes | Yes | Yes | Yes | No |
| Possibility of molding of tube | | Yes | Yes | Yes | No | Yes |
| Dimensional stability of tube | | Yes | Yes | No | No | Yes |

REFERENCE SIGNS LIST

| | |
|---|---|
| 1 | tube |
| 2 | hollow |
| 100 | tube-producing system |
| 10 | extruder |
| 20 | mold |
| 30 | back-flow prevention device |
| 40 | sizing die |
| 50 | cooling device (cooling water pool) |
| 60 | drawing machine |
| 70 | winding device |
| 71 | lead tube |
| 80 | gas-feeding device |

**Claims**

1. A method for producing a tube, comprising:

    extruding a melt-fabricable fluororesin from a mold of an extruder into a form of a tube,
    leading the extruded melt-fabricable fluororesin to a cooling device to cool the extruded melt-fabricable fluororesin, and
    winding a resulting cooled tube onto a winding reel using a winding device,
    wherein a gas is fed from a head end of the tube wound onto the winding reel into a hollow of the tube,
    the gas in the hollow is allowed to pass through a gas-introducing entrance of the mold and then through a gas-discharging hole of the mold to discharge the gas outside, thereby allowing the gas to flow along the hollow, and
    an internal pressure of the hollow is kept higher than atmospheric pressure and lower than 0.5 kgf/cm$^2$.

2. The production method according to claim 1, wherein the gas fed into the hollow is a gas that has passed through a filter.

3. The production method according to claim 1 or 2, wherein the gas fed into the hollow is air that has passed through a filter.

4. The production method according to any one of claims 1 to 3, wherein
    after stopping the extrusion of the melt-fabricable fluororesin, the tube is melt-sealed and cut at two arbitrary points therein, to thereby produce a tube filled with the gas.

5. The production method according to any one of claims 1 to 4, wherein the extruder comprises the mold and a back-flow prevention device,

    the mold comprises: a resin discharge outlet configured to discharge the melt-fabricable fluororesin in the form of a tube; the gas-introducing entrance configured to introduce the gas in the hollow of the melt-fabricable fluororesin in the form of a tube to the gas-discharging hole of the mold; and the gas-discharging hole configured to discharge the gas introduced from the gas-introducing entrance to an outside of the mold, and
    the back-flow prevention device is connected downstream of the gas-discharging hole of the mold to prevent a back flow of the gas.

6. The production method according to any one of claims 1 to 5, wherein the mold comprises: a resin discharge outlet configured to discharge the melt-fabricable fluororesin in the form of a tube; the gas-introducing entrance configured to introduce the gas in the hollow of the melt-fabricable fluororesin in the form of a tube to the gas-discharging hole of the mold; and the gas-discharging hole configured to discharge the gas introduced from the gas-introducing entrance to an outside of the mold, and
    the gas-introducing entrance is formed such that the gas-introducing entrance has an opening with a diameter gradually increasing from the gas-discharging hole toward the gas-introducing entrance.

7. The production method according to any one of claims 1 to 6, wherein the winding device comprises:

a gas-feeding inlet configured to feed the gas into the hollow of the tube;
one or more filters provided downstream of the gas-feeding inlet and configured to remove a contaminant in the gas fed from the gas-feeding inlet;
a tube-connecting port provided downstream of the one or more filters and configured to connect the tube thereto; and
a winding reel configured to wind the tube thereon.

8. The production method according to any one of claims 1 to 7, wherein the winding device comprises:

a gas-feeding inlet configured to feed the gas into the hollow of the tube;
a lead tube connected to the gas-feeding inlet, wherein the lead tube is for joining the head end of the tube before being wound to the gas-feeding inlet; and
a winding reel configured to wind the tube and the lead tube thereon.

9. The production method according to any one of claims 1 to 8, wherein the winding device comprises a lead tube, and while the gas is fed into the lead tube, a head end of the lead tube is connected to a head end of the melt-fabricable fluororesin extruded from the mold, thereby feeding the gas into the hollow of the tube.

10. The production method according to claim 9, wherein the head end of the lead tube is connected to the head end of the melt-fabricable fluororesin extruded from the mold, with the lead tube reeled-out from the winding device to the mold, and
then, continuous extrusion of the melt-fabricable fluororesin from the mold and winding of the lead tube and the cooled tube are started.

11. The production method according to any one of claims 1 to 10, wherein the melt-fabricable fluororesin is a tetrafluoroethylene/fluoroalkyl vinyl ether copolymer.

12. An extruder comprising: a mold configured to mold a melt-fabricable fluororesin into a form of a tube; and a back-flow prevention device,

wherein the mold comprises: a resin discharge outlet configured to discharge the melt-fabricable fluororesin in the form of a tube; a gas-introducing entrance configured to introduce a gas in a hollow of the melt-fabricable fluororesin in the form of a tube to a gas-discharging hole of the mold; and the gas-discharging hole configured to discharge the gas introduced from the gas-introducing entrance to an outside of the mold, and
the back-flow prevention device is connected downstream of the gas-discharging hole of the mold to prevent a back flow of the gas.

13. The extruder according to claim 12, wherein the back-flow prevention device is a bubbling device.

14. An extrusion mold for molding a melt-fabricable fluororesin into a form of a tube, comprising: a resin discharge outlet configured to discharge the melt-fabricable fluororesin in the form of a tube; a gas-introducing entrance configured to introduce the gas in the hollow of the melt-fabricable fluororesin in the form of a tube to a gas-discharging hole of the mold; and the gas-discharging hole configured to discharge the gas introduced from the gas-introducing entrance to an outside of the mold,
wherein the gas-introducing entrance is formed such that the gas-introducing entrance has an opening with a diameter gradually increasing from the gas-discharging hole toward the gas-introducing entrance.

15. The extrusion mold according to claim 14, wherein the gas-introducing entrance is inversely tapered.

16. A winding device for winding a tube, comprising:

a gas-feeding inlet configured to feed a gas into a hollow of the tube;
one or more filters provided downstream of the gas-feeding inlet and configured to remove a contaminant in the gas fed from the gas-feeding inlet;
a tube-connecting port provided downstream of the one or more filters and configured to connect the tube thereto; and

a winding reel configured to wind the tube thereon.

17. The winding device according to claim 16, wherein two or more of the filters linked to each other in series are included, and the filters have different filtration accuracies.

18. The winding device according to claim 16 or 17, further comprising a rotatable joint provided downstream of the gas-feeding inlet and upstream of the one or more filters.

19. A winding device for winding a tube, comprising:

a gas-feeding inlet configured to feed a gas into a hollow of the tube;
a lead tube connected to the gas-feeding inlet, wherein the lead tube is for joining the head end of the tube before being wound to the gas-feeding inlet; and
a winding reel configured to wind the lead tube thereon.

20. The winding device according to claim 19, wherein the lead tube has a length of 3 m or more.

21. A tube with both ends thereof sealed, comprising a melt-fabricable fluororesin, wherein a gas that has passed through a filter is filled into a hollow of the tube.

22. The tube according to claim 21, wherein the both ends are melt-sealed.

23. The tube according to claim 21 or 22, wherein the tube has an inner surface that has not brought into contact with a gas that had not passed through a filter.

24. The tube according to any one of claims 21 to 23, wherein the tube has a length of 25 m or more.

25. The tube according to any one of claims 21 to 24, wound onto a winding reel.

## Figure 1

EP 4 215 337 A1

Figure 2

19

Figure 3

203

204
202

201

200

Figure 4

## Figure 5

Figure 6

Figure 7

## INTERNATIONAL SEARCH REPORT

International application No.

**PCT/JP2021/032272**

### A. CLASSIFICATION OF SUBJECT MATTER

***B29C 48/09***(2019.01)i; ***B29C 48/27***(2019.01)i; ***B29C 48/28***(2019.01)i; ***B29C 48/32***(2019.01)i; ***B29C 48/885***(2019.01)i; ***B29C 48/90***(2019.01)i; ***F16L 11/06***(2006.01)i

FI: B29C48/27; B29C48/09; B29C48/32; B29C48/28; B29C48/90; B29C48/885; F16L11/06

According to International Patent Classification (IPC) or to both national classification and IPC

### B. FIELDS SEARCHED

Minimum documentation searched (classification system followed by classification symbols)

B29C48/09; B29C48/27; B29C48/28; B29C48/32; B29C48/885; B29C48/90; F16L11/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-2341 A (DAIKIN INDUSTRIES, LTD.) 09 January 2020 (2020-01-09) entire text | 1-25 |
| A | JP 2008-238664 A (TOHOKU UNIVERSITY) 09 October 2008 (2008-10-09) entire text | 1-25 |
| A | JP 2000-233435 A (NICHIAS CORP.) 29 August 2000 (2000-08-29) entire text | 1-25 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2021** | **12 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/032272**

| Patent document cited in search report | | | Publication date (day/month/year) | Patent family member(s) | | | Publication date (day/month/year) |
|---|---|---|---|---|---|---|---|
| JP | 2020-2341 | A | 09 January 2020 | WO | 2020/004083 | A1 | |
| | | | | entire text | | | |
| | | | | TW | 202012518 | A | |
| JP | 2008-238664 | A | 09 October 2008 | US | 2010/0119642 | A1 | |
| | | | | entire text | | | |
| | | | | WO | 2008/123052 | A1 | |
| JP | 2000-233435 | A | 29 August 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000233435 A